(19) Europäisches Patentamt
European Patent Office
Office européen des brevets

(11) EP 2 825 770 B1

(12) FASCICULE DE BREVET EUROPEEN

(45) Date de publication et mention de la délivrance du brevet:
**11.07.2018 Bulletin 2018/28**

(51) Int Cl.:
*F03D 13/20* (2016.01)      *F03D 9/00* (2016.01)
*F03D 3/06* (2006.01)      *F03D 3/02* (2006.01)

(21) Numéro de dépôt: **12778806.5**

(22) Date de dépôt: **17.10.2012**

(86) Numéro de dépôt international:
**PCT/IB2012/055655**

(87) Numéro de publication internationale:
**WO 2013/136142 (19.09.2013 Gazette 2013/38)**

(54) **AEROGENERATEUR COMPRENANT UN TRONC ET UNE PLURALITE DE BRANCHES S'ETENDANT A PARTIR DE CE TRONC**

WINDGENERATOR MIT EINEM STAMM SOWIE MEHREREN VON DIESEM STAMM AUSGEHENDEN ZWEIGEN

AEROGENERATOR COMPRISING A TRUNK AND A PLURALITY OF BRANCHES EXTENDING FROM THIS TRUNK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.03.2012 FR 1252295**

(43) Date de publication de la demande:
**21.01.2015 Bulletin 2015/04**

(73) Titulaire: **NEW WORLD WIND
92600 Asnières-sur-Seine (FR)**

(72) Inventeur: **MICHAUD-LARIVIERE, Jérôme
F-75005 Paris (FR)**

(74) Mandataire: **Cabinet Plasseraud
66, rue de la Chaussée d'Antin
75440 Paris Cedex 09 (FR)**

(56) Documents cités:
**WO-A2-2004/046544      DE-U1-202009 009 716
DE-U1-202010 016 041      US-A1- 2009 285 689
US-A1- 2009 295 293**

• **Paul Ridden: "Power Flowers to domesticate wind turbines", Gizmag, 3 March 2011 (2011-03-03), pages 1-4, XP055083633, Retrieved from the Internet: URL:http://www.gizmag.com/power-flowers-project-aims-to-bring-wind-turbines-closer-to-home/18049/ [retrieved on 2013-10-11]**

EP 2 825 770 B1

**Description**

L'invention concerne un aérogénérateur.

Un aérogénérateur est un générateur électrique qui produit de l'électricité à partir de l'énergie du vent.

Plus précisément, l'invention concerne un aérogénérateur comprenant un tronc et une pluralité de branches s'étendant à partir de ce tronc.

De tels aérogénérateurs présentent donc la forme d'un arbre et peuvent être intégrés au paysage tout en limitant l'impact visuel de celui-ci.

Le document WO 2011/132130 propose un tel aérogénérateur, en l'occurrence en forme de sapin, dans lequel des turbines sont montées sur un arbre commun logé dans le tronc et formant rotor du générateur électrique.

Selon cette conception, une panne du générateur électrique implique l'absence totale de production d'électricité.

Ce problème peut être évité avec d'autres conceptions.

Par exemple, le document US 2010/0289269 propose un aérogénérateur, également en forme de sapin, dans lequel on prévoit dans un mode de réalisation une pluralité de turbines, dont chacune d'entre elles est associée à un générateur électrique disposé à proximité de la turbine. La publication en internet http://www.gizmag.com/power-flowers-project-aims-to-bring-wind-turbines-closer-to-home/18049/ montre un système visant aussi l'intégration urbaine des aérogénérateurs. Ainsi, si un générateur électrique fait défaut, il est toujours possible de produire de l'électricité.

A cet effet, le générateur électrique est monté à l'intérieur de la branche, au niveau de l'extrémité de cette branche, laquelle est agencée horizontalement. La turbine, en forme d'hélice, présente un moyeu monté sur l'axe de rotation du rotor du générateur électrique.

Toutefois, cet agencement n'est pas optimal pour des raisons techniques et esthétiques.

Par ailleurs, chaque turbine en forme d'hélice présente des pâles s'étendant radialement par rapport à la branche portant ladite turbine. Cet agencement est nécessaire pour obtenir une hélice d'axe horizontal susceptible de tourner sous l'action du vent.

Il en résulte un encombrement radial important qui limite les possibilités d'agencement des différentes turbines les unes par rapport aux autres. D'ailleurs, il convient de noter que le document US 2010/0289269 propose d'installer de telles turbines uniquement à l'extrémité de chaque branche, probablement pour éviter l'effet d'écran entre deux turbines qui seraient situées sur une même branche.

Il en résulte également une forme générale qui est difficilement assimilable à celle d'un arbre.

De plus, l'installation du générateur électrique dans la branche elle-même ne favorise pas son refroidissement et augmente les risques de surchauffe de ce dernier. Objet de de l'invention est de pallier l'un au moins de ces problèmes.

En particulier, un objectif de l'invention est de proposer un aérogénérateur dans lequel la forme des turbines optimise le temps de fonctionnement de chaque turbine et limite les risques de défaut du générateur électrique.

En particulier également, un autre objectif de l'invention est de proposer un aérogénérateur dans lequel la forme des turbines et leur agencement respectif est optimisé pour limiter les effets d'écran entre les différentes turbines.

A cet effet, l'invention propose un aérogénérateur comprenant les caractéristiques de la revendication 1, entre autres - un tronc et une pluralité de branches s'étendant à partir de ce tronc:

- une pluralité de turbines réparties sur les différentes branches, chaque turbine présentant un axe de rotation vertical ; et
- un générateur électrique monté à l'intérieur de chaque turbine sur l'axe de rotation de ladite turbine. Selon l'invention les branches sont réparties à différentes positions angulaires autour du tronc.

L'aérogénérateur selon l'invention pourra également comprendre l'une au moins des caractéristiques suivantes, prises seules ou en combinaison :

- chaque turbine présente au moins deux parties incurvées s'étendant le long cet axe, chacune de ces parties comportant une ouverture attenante à cet axe et en ce que le générateur électrique est logé à l'intérieur de la turbine de sorte qu'un espace soit maintenu entre le générateur électrique et les contours des ouvertures ;
- au moins certaines turbines présentent la forme d'une ogive dont l'axe longitudinal se confond avec l'axe de rotation de la turbine ;
- au moins certaines turbines sont de type Savonius, c'est-à-dire qu'elles présentent au moins deux parties incurvées semi-cylindriques désaxées l'une par rapport à l'autre pour définir lesdites ouvertures ;
- l'aérogénérateur comprend entre 80 et 150 turbines, chaque turbine comportant des parties incurvées dont la surface cumulée est comprise entre 8cm$^2$ et 64cm$^2$ ;
- au moins certaines turbines comprennent une armature de rigidification fixée en deux points de l'axe de rotation de la turbine ;
- l'armature de rigidification se conforme aux contours externes de chaque partie de la turbine ;

Selon l'invention chaque turbine présente une forme assimilable à celle d'une feuille d'arbre. Avantageusement chaque turbine est réalisée en un matériau choisi parmi le polycarbonate, le polyéthylène, un métal de préférence non oxydable, un acier ou du bois tel que le bambou ;

- le générateur électrique comprend au moins un rotor, monté sur l'axe de rotation de la turbine, de forme annulaire et muni d'aimants permanents ; et un stator, monté sur un bâti de la turbine, de forme annulaire et comportant des bobines destinées à interagir avec les aimants permanents du rotor ;
- le générateur électrique comprend deux rotors identiques, chacun de ces rotors étant disposé de part et d'autre du stator comportant, sur chacune de ses faces, des bobines faisant face aux aimants permanents du rotor concerné ;
- les aimants permanents sont disposés sur le contour du ou de chaque rotor et en ce que les bobines sont également disposés sur le contour du stator ;

L'invention comprend au moins une tubulure portant au moins une turbine, ladite au moins une tubulure étant montée sur une branche. Avantageusement ladite au moins une tubulure est montée de façon amovible sur ladite branche ; Selon l'invention chaque branche comprend plusieurs turbines. Avantageusement les branches sont montées de façon amovible sur le tronc ;

- le tronc est réalisé d'une seule pièce et comprend une pluralité de réceptacles pour lesdites branches, ces réceptacles étant disposés à différentes hauteurs le long du tronc et à différentes positions angulaires autour de ce tronc ;
- le tronc comprend une pluralité de tronçons fixés les uns aux autres, chaque tronçon comportant au moins un réceptacle pour une branche, lesdits réceptacles étant disposés à différentes hauteurs le long du tronc et à différentes positions angulaires autour de ce tronc.

L'invention sera mieux comprise et d'autres buts, avantages et caractéristiques de celle-ci apparaîtront plus clairement à la lecture de la description qui suit et qui est faite au regard des dessins annexés, sur lesquels :

- la figure 1 représente, selon une vue de face, un aérogénérateur selon l'invention;
- la figure 2 représente, selon une vue en perspective, un exemple de turbine selon l'invention pouvant être utilisée sur l'aérogénérateur de la figure 1 ;
- la figure 3 représente, selon une vue en perspective, un autre exemple de turbine selon l'invention pouvant être utilisée sur l'aérogénérateur de la figure 1 ;
- la figure 4 représente, selon une vue de dessus et une vue en perspective, un autre exemple de turbine pouvant être utilisée sur l'aérogénérateur de la figure 1 ;
- la figure 5 représente, selon une vue latérale et deux vues de coupe, un autre exemple de turbine pouvant être utilisée sur l'aérogénérateur de la figure 1 ;
- la figure 6 représente une variante de la turbine représentée sur la figure 5 ;

- la figure 7 représente la courbe de puissance de la turbine représentée sur la figure 5 ;
- la figure 8 représente, en vue éclatée, un générateur électrique susceptible d'être utilisée avec l'une quelconque des turbines représentées sur les autres figures annexées ;
- la figure 9 représente, selon une vue une perspective, un sous-ensemble de l'aérogénérateur représenté sur la figure 1 comportant des turbines telles que représentées sur la figure 3 ;
- la figure 10 représente, selon une vue de dessus, un autre aérogénérateur selon l'invention.

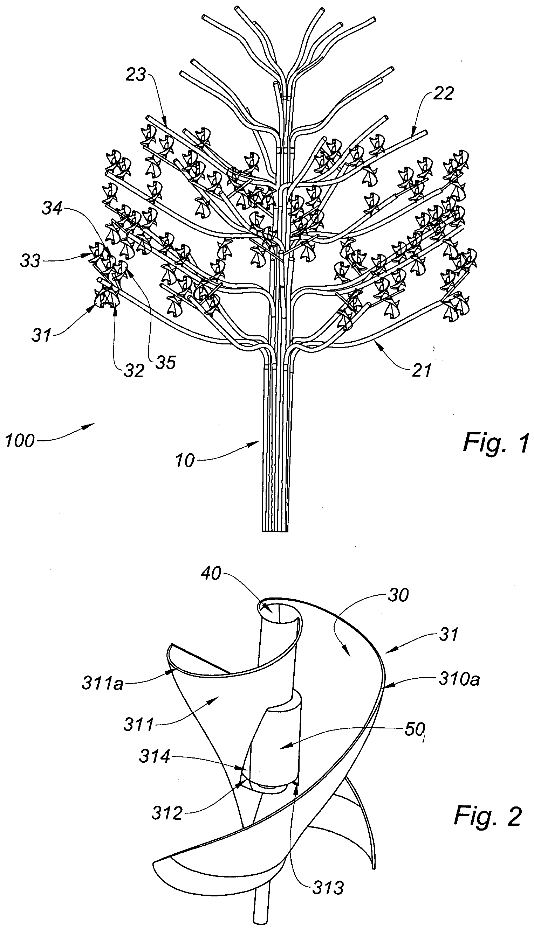

Un aérogénérateur 100 conforme à l'invention est présenté sur la figure 1.

Cet aérogénérateur 100 comprend un tronc 10 et une pluralité de branches 20, 21, 22, 23 s'étendant à partir de ce tronc 10.

Sur la figure 1, le tronc 10 est formé par l'ensemble des tubulures destinées à former les différentes branches.

Cependant, on peut prévoir un tronc fait d'une pièce, sur lequel les branches sont montées.

Selon une autre variante, on peut également prévoir un tronc réalisé par différents tronçons fixés les uns aux autres, avec lequel chaque branche est monté sur un tronçon dédié.

Avantageusement, les branches sont alors montées de façon amovible sur le tronc, fait d'une seule pièce ou de plusieurs tronçons. Un montage amovible des branches 20, 21, 22, 23, 24 sur le tronc facilite la maintenance.

Chaque branche 20, 21, 22, 23, 24 comporte au moins une turbine. Par exemple, la branche 20 comporte cinq turbines référencées 31, 32, 33, 34, 35.

Les turbines de l'aérogénérateur 100 sont disposées de sorte que leur axe de rotation est vertical.

A chaque turbine 31 est associé un générateur électrique 50 comprenant un rotor et un stator. L'axe de rotation 40 de la turbine 31 correspond à l'axe longitudinal (de rotation) du rotor et par conséquent, à l'axe longitudinal du générateur électrique.

Si l'un des générateurs électriques subit une panne, l'aérogénérateur 100 peut donc continuer à produire de l'électricité.

Le générateur électrique 50 est logé à l'intérieur de la turbine 31.

Ceci présente plusieurs avantages.

En effet, en disposant le générateur électrique 50 à l'intérieur de la turbine 31, on expose le générateur électrique au vent. Ceci facilite son refroidissement et limite les risques de panne de celui-ci.

De plus, l'installation du générateur électrique 50 à l'intérieur de la turbine 31 permet de rigidifier l'ensemble ainsi formé par la turbine 31 et le générateur électrique 50. On répond donc aux contraintes de rigidité nécessaires à la résistance à un vent important.

De surcroît, on limite ainsi le diamètre de l'axe de rotation 40 de la turbine 31, par rapport au diamètre qui serait nécessaire, en l'absence du générateur électrique 50, pour obtenir la même rigidité. L'encombrement radial de la turbine 31 est donc réduit et l'effet d'écran pour une autre turbine diminué.

La diminution de l'effet d'écran est intéressante car elle permet si on le souhaite, d'augmenter le nombre de turbines sur un aérogénérateur donné en s'assurant que toutes les turbines pourront être soumises à un vent.

Le générateur électrique 50 peut être un alternateur ou un générateur électrique à courant continu, le choix de l'un ou de l'autre s'effectuant notamment sur des contraintes de coûts.

Un premier exemple de turbine 31 d'axe de rotation vertical susceptible d'être utilisé est représenté sur la figure 2.

Cette turbine 31 présente deux parties 310, 311 s'étendant le long de l'axe longitudinal 40 de cette turbine.

Cet axe longitudinal se confond avec l'axe de rotation de la turbine 40.

Avantageusement, les parties 310, 311 sont incurvées pour une meilleure prise au vent. On diminue ainsi la valeur limite en dessous de laquelle la turbine 31 peut vaincre le couple de résistance à la rotation.

C'est notamment le cas par rapport à une turbine en forme d'hélice d'axe horizontal telle que celle proposée dans le document US 2010/0289269, lorsque celle-ci présente des dimensions comparables.

Le temps de fonctionnement de l'aérogénérateur 100 et son rendement en sont améliorés.

Une forme incurvée présente également l'avantage d'être assimilable à la forme d'une feuille d'arbre. Ainsi, une meilleure intégration de l'aérogénérateur 100 au paysage environnant est obtenue.

Par ailleurs, chaque partie 310, 311 de la turbine 31 comporte une ouverture 312, 313 attenante à l'axe de rotation 40 de la turbine 31.

Le générateur électrique 50 est donc logé entre les deux parties 310, 311 de la turbine 31.

L'agencement respectif du générateur électrique 50 et des ouvertures 312, 313 est réalisé de sorte qu'un espace 314 soit maintenu entre ledit générateur électrique et les contours desdites ouvertures 312, 313.

La rotation de la turbine 31 autour de son axe n'est donc pas gênée par le générateur électrique 50.

Par ailleurs, cet espace 314 présente un avantage particulier.

En effet, lorsque le vent frappe l'une 310 des deux parties 310, 311 de la turbine 31, une partie du vent s'engouffre dans cet espace 314 ce qui permet un effet d'interaction avec l'autre partie 311 de la turbine 31.

On diminue ainsi encore un peu plus la valeur limite de la vitesse du vent en dessous de laquelle la turbine 31 peut fonctionner, en s'opposant au couple de résistance à la rotation.

Le temps de fonctionnement de l'aérogénérateur 100 et son rendement en sont donc encore améliorés.

Ceci permet de renforcer l'effet d'interaction entre les deux parties 310, 311 de la turbine 31.

La turbine décrite à l'appui de la figure 2 présente deux parties 310, 311 dont les contours externes 310a, 311a sont hélicoïdaux.

Toutefois, d'autres formes de turbines peuvent être envisagées.

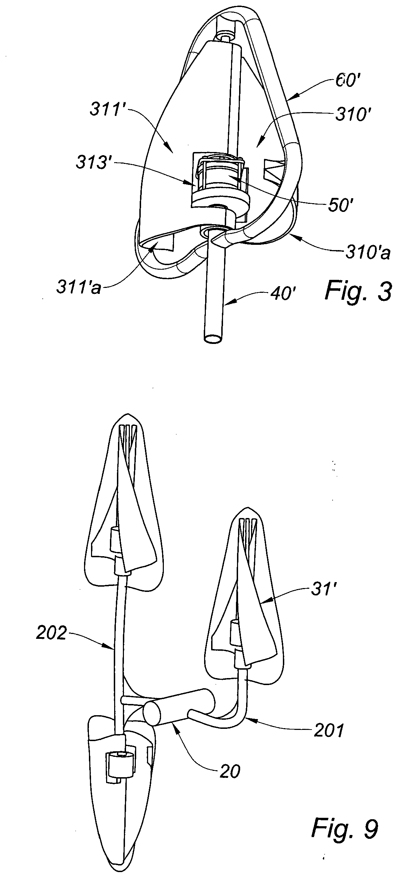

Un deuxième exemple de turbine à axe de rotation verticale est décrit ci-après à l'appui de la figure 3.

Selon cet exemple, les deux parties incurvées 310', 311' de la turbine 31' présentent des contours externes 310'a, 311'a hélicoïdaux tout en définissant une forme d'ogive dont l'axe longitudinal se confond avec l'axe de rotation de la turbine 31'.

Contrairement au mode de réalisation représenté sur la figure 2, le rayon de chaque partie 310', 311' n'est donc pas constant le long de l'axe de rotation 40' de la turbine 31'.

La forme de la turbine 31' est encore plus assimilable à celle de la feuille d'un arbre.

Le générateur électrique 50' est par ailleurs logé entre les deux parties 310', 311' de la turbine 31', grâce à l'existence d'une ouverture 313' dans chaque partie 310', 311'.

De plus, afin de renforcer la turbine 31', on peut prévoir une armature 60' pour rigidifier celle-ci. Cette armature 60' est par exemple fixée en deux points sur l'axe de rotation 40' de la turbine 31'.

Avantageusement, l'armature 60' se conforme aux contours externes 310'a, 311'a des deux parties 310', 311' de la turbine 31' pour limiter l'encombrement radial et par suite, l'effet d'écran avec une autre turbine.

Il convient de noter qu'une telle armature de rigidification peut également être prévue sur la turbine 31 décrite à l'appui de la figure 2.

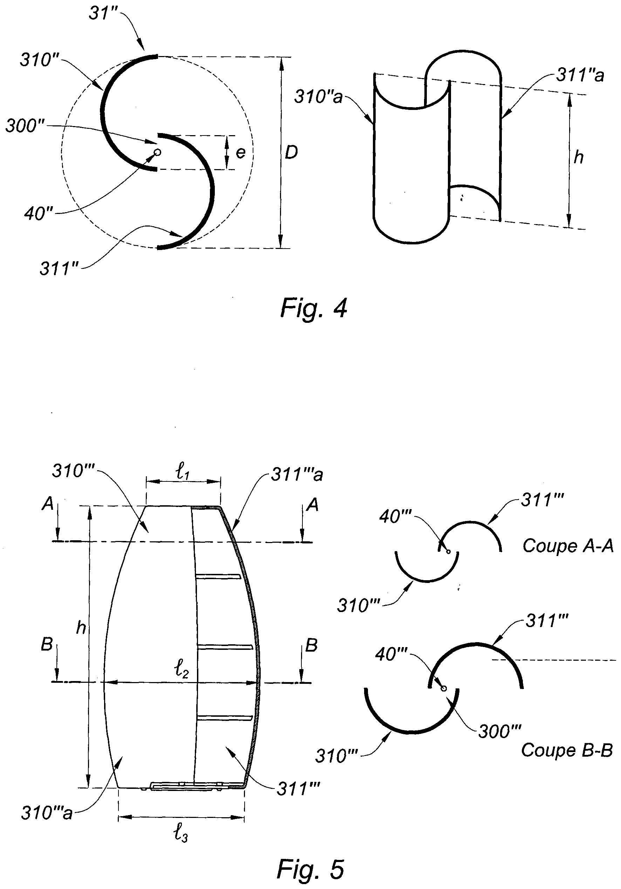

Selon un troisième exemple, comme représenté sur la figure 4, la turbine 31" pourrait être basée sur une turbine de type « Savonius » simple, c'est-à-dire dans laquelle les contours externes 310"a, 311"a des deux parties incurvées 310", 311" de la turbine sont droits, éventuellement avec une armature de rigidification telle que décrite précédemment. Cette solution est cependant moins avantageuse sur le plan esthétique. Sur la figure 4, la turbine 31" est représentée en vue de dessus à gauche et en perspective à droite. D est son diamètre, h sa hauteur et e le désaxement entre les parties incurvées.

De manière connue, une turbine « Savonius » est une turbine d'axe de rotation 40" vertical qui comprend deux parties incurvées, présentant chacune une forme semi-cylindrique et qui sont désaxées l'une par rapport à l'autre pour laisser une ouverture entre elles.

Selon un quatrième exemple, comme représenté sur la figure 5, la turbine 31''' est une variante de la turbine 31" de la figure 4.

Il s'agit d'une turbine de type « Savonius » dans la mesure où elle présente deux parties incurvées semi-cylindriques qui sont désaxées l'une par rapport à l'autre pour définir une ouverture capable de faire passer le vent d'une partie à l'autre. Cependant, les contours externes 310'''a, 311'''a des parties/pales 310''', 311''' de la turbine 31''' sont bombées vers l'extérieur. Autrement dit, il s'agit d'une turbine de type « Savonius » dont les contours externes 310'''a, 311'''a permettent de définir une turbine en forme d'ogive. L'ogive est telle que son axe longitudinal se confond avec l'axe de rotation 40''' de la turbine 31'''. Les exemples de turbines décrits précédemment présentent deux parties incurvées.

Dans de tels cas, ces parties sont avantageusement disposées symétriquement par rapport à l'axe de rotation de la turbine, dans la mesure où cette symétrie assure un fonctionnement optimal de la turbine.

Cependant, on peut envisager des turbines comportant plus de deux parties incurvées s'étendent le long de l'axe de rotation de la turbine.

Dans ce cas, les différentes parties de la turbine, lesquelles sont fixées ou moulées sur l'axe de rotation de la turbine, sont avantageusement réparties à intervalles angulaires réguliers autour de cet axe. Cette répartition assure un fonctionnement optimal de la turbine.

Dans tous les cas, les turbines décrites précédemment comprennent plusieurs parties incurvées qui s'étendent le long de l'axe de rotation de la turbine ainsi que des ouvertures formées dans ces parties et attenantes à l'axe de rotation de la turbine permettant de loger le générateur électrique.

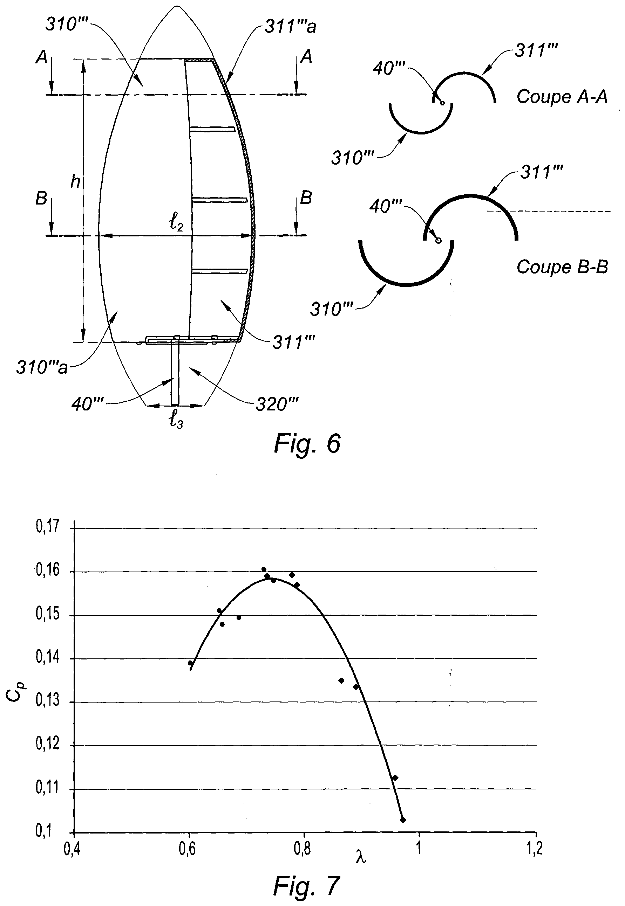

Ces ouvertures peuvent être formées indifféremment dans les parties concernées (pales) de la turbine. En effet, la figure 2 représente des ouvertures 312, 313 centrées le long de l'axe de rotation 40 sur la hauteur des parties 310, 311 de la turbine 31. La figure 3 représente quant à elle des ouvertures 313' qui sont excentrées dans une zone inférieure des parties 310', 311' de la turbine 31'. Enfin, la figure 6 représente des ouvertures situées aux extrémités inférieures des deux parties formant la turbine.

La figure 6 est une variante de la figure 5 dans laquelle il est prévu un prolongement des parties incurvées de la turbine définissant un volume interne creux 320''' dans la turbine, lequel permet de loger le générateur électrique. Les pales de la turbine ne sont donc pas présentes dans ce creux. En outre, les différentes turbines représentées sur les figures 2, 3 ou 4 peuvent prévoir, en partie inférieure, un tel prolongement.

Par ailleurs, il convient de noter que dans le cas des turbines basées sur la forme « Savonius », à savoir les turbines représentées sur les figures 4 et 5, l'ouverture 300", 300''' liée à la forme « Savonius » et qui laisse passer le vent d'une pale à l'autre peut être suffisante pour loger le générateur sans que les différentes parties de la turbine ne soient percées comme c'est le cas pour les turbines représentées sur les figures 2 ou 3. Afin de faire le lien avec les turbines représentées sur les figures 2 ou 3, il convient de noter que l'ouverture 300" (resp. 300''') correspond à l'ouverture formée par l'association des deux ouvertures 312, 313 de la figure 2. D'autres formes de turbines à axe de rotation vertical peuvent être envisagées. Ainsi, on peut envisager une turbine de type « Darrieus » ou une turbine combinant les technologies « Darrieus » et « Savonius ». Compte tenu de la forme de ces turbines, aucune ouverture dans les différentes parties de la turbine n'est alors réalisée, mais le générateur électrique reste soumis à l'action du vent. Ces solutions, bien qu'envisageables, restent toutefois moins avantageuses que celles décrites, par exemple, à l'appui des figures 2 et 3.

Typiquement, une turbine 31, 31' telle que représentée sur les figures 2 ou 3 pourra présenter une surface de contact avec le vent d'environ 600cm$^2$. Par exemple, dans le cas des turbines 31, 31' représentées sur les figures 2 ou 3, cette surface peut être obtenue avec une turbine dont la hauteur est d'environ 40cm et la largeur d'environ 15cm.

Une mise en rotation de la turbine est ainsi en dessous d'une vitesse de vent de 2m/s, voire en dessous de 1m/s.

De plus, lorsqu'une turbine 31, 31' présente une surface d'environ 600cm$^2$, il convient de noter qu'un nombre d'environ 300 turbines permet d'obtenir une puissance totale de l'ordre de 3kW.

Cependant, les turbines représentées sur les figures 4, 5 ou 6 sont, à surface d'échange égale, plus performantes en termes de rendement que les turbines représentées sur les figures 2 ou 3.

Ainsi, pour obtenir une puissance totale de l'ordre de 3kW, il est possible de mettre en oeuvre entre 80 et 150 turbines, la surface de prise au vent de chaque turbine étant comprise entre 8cm$^2$ et 64cm$^2$. La surface de prise au vent correspond à la surface cumulée de l'ensemble des parties/pales formant la turbine.

Plus précisément, on peut envisager des turbines dont la surface des pales est comprise entre 10cm$^2$ et 20cm$^2$ avec un nombre de turbines compris entre 80 et 120 pour délivrer au moins 3kW. En pratique, cela permet de définir un arbre présentant une hauteur d'environ 8m.

On peut également envisager des turbines dont la surface des pales est comprise entre 10cm$^2$ et 20cm$^2$ avec un nombre de turbines compris entre 120 et 150 pour délivrer au moins 3kW. En pratique, cela permet de définir un arbre présentant une hauteur d'environ 12m.

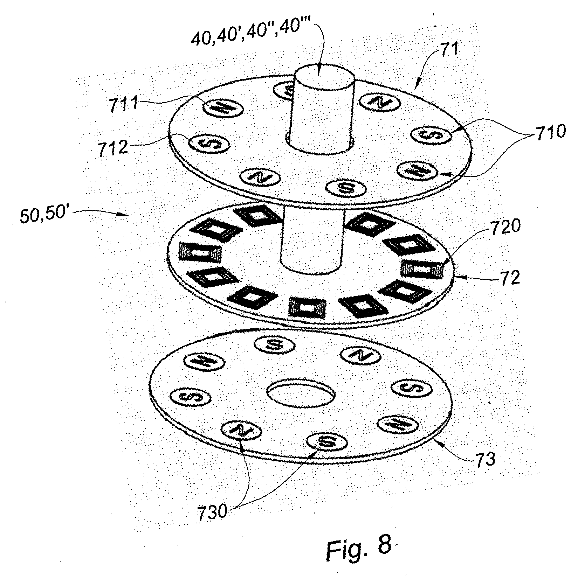

Les performances de la turbine 31''' de la figure 5 sont représentées sur la figure 7 dans le cas où $l_1$ = 145mm, $l_2$ = 310mm et $l_3$ = 247mm. La largeur $l_1$ est la largeur de la turbine 31''' au niveau de son extrémité supérieure, la largeur $l_2$ correspond à sa largeur maximale et la largeur $l_3$ est la largeur de la turbine 31''' au niveau de son extrémité inférieure. A cette turbine est associé un générateur électrique tel que décrit ultérieurement à l'appui de la figure 8, disposé à la base de la turbine, le rayon du ou de chaque rotor associé étant en l'occurrence de r = 95mm.

La figure 7 représente l'évolution du coefficient

de puissance $C_p$ de la turbine en fonction d'un rapport de vitesse $\lambda$.

Le coefficient de puissance $C_p$ correspond au rapport entre la puissance réellement générée par la turbine ($P_{turbine}$) sur la puissance maximale extractible du vent ($P_{vent}$), soit $C_p = P_{turbine}/P_{vent}$.

La puissance de la turbine est une donnée mesurée.

La puissance maximale extractible du vent s'exprime comme suit :

$$P_{vent} = \tfrac{1}{2}*\rho_{air}*S*V^3$$

où :

$\rho_{air}$, est la masse volumique de l'air ;
S, la surface cumulée des pales de la turbine
V, la vitesse du vent.

Le rapport de vitesse $\lambda$ est défini comme suit :

$$\lambda = (\omega_r*R_r)/V$$

où :

$\omega_r$, est la vitesse de rotation angulaire du rotor du générateur électrique, laquelle correspond à la vitesse de rotation angulaire de l'axe de rotation de la turbine ;
$R_r$, le rayon du rotor du générateur électrique ;
V, la vitesse du vent.

De manière générale, il convient de noter que les largeurs $l_1$ et $l_3$ de cette turbine 31''' peuvent atteindre la valeur nulle. C'est par exemple le cas pour la longueur $l_1$ de la figure 6.

La turbine peut être réalisée en un matériau choisi parmi le polycarbonate, le polyéthylène, un métal de préférence non oxydable, un acier ou du bois, tel que le bambou.

Certaines figures annexées représentent schématiquement le générateur 50, 50'.

Ce générateur 50, 50' pourra présenter une conception spécifique, comme représentée en vue éclatée sur la figure 8.

Ainsi, un premier disque 71 formant rotor peut être monté sur l'axe de rotation 40, 40', 40", 40''' de la turbine. Ce premier disque 71 comprend une pluralité d'aimants permanents 710 disposés sur son contour. Les aimants qui se succèdent le long de ce contour présentent une polarité inversée (Nord/sud). On distingue ainsi des aimants 711 de polarité « Nord » et des aimants 712 de polarité « Sud ».

Un deuxième disque 72 est agencé en vis-à-vis du premier disque 71. Ce deuxième disque 72 forme stator et est donc monté sur un bâti support de la turbine (non représenté) afin de ne pas être entraîné en rotation par l'axe de rotation de la turbine. Il comporte des bobines 720 destinées à interagir avec les aimants permanents 710 situés sur le rotor 71.

Avantageusement et comme représenté sur la figure 8, il est prévu un troisième disque 73 formant rotor, identique au premier disque 71 formant rotor. Ce deuxième rotor 73 est monté sur l'axe de rotation de la turbine. Le stator 72 est alors disposé entre les deux rotors 71, 73. Le stator 72 comprend alors des bobines 720 disposées sur le contour d'une première face de ce stator destinées à interagir avec les aimants permanents 710 du premier rotor 71 et des bobines (non visibles sur la figure 8) disposées sur le contour d'une deuxième face du stator 72 destinées à interagir avec les aimants permanents 730 du deuxième rotor 73.

Les bobines sont avantageusement réalisées sur un circuit imprimé.

Cette forme du générateur est particulièrement compacte. Elle présente donc l'avantage de pouvoir loger un maximum de bobinages dans le stator et un maximum d'aimants ou chaque rotor tout en étant peu encombrante, notamment sur le plan radial.

Il peut donc aisément être logé dans les parties incurvées/pales de la turbine, sans pour autant élargir cette turbine, ce qui serait néfaste pour la prise aux vents d'autres turbines.

Par ailleurs, l'ouverture réalisée dans les pales de la turbine peut ainsi être relativement plate dans la mesure où l'épaisseur du générateur est faible, typiquement inférieure à 2-3cm. Cela est intéressant dans la mesure où l'on peut conserver une surface de pales élevée tout en maintenant la possibilité de passage du vent d'une pale à l'autre à travers les ouvertures formées dans celles-ci. La forme en disque du générateur électrique est donc particulièrement bien adaptée pour maintenir les performances d'une turbine.

La figure 9 représente un sous-ensemble de l'aérogénérateur représenté sur la figure 1 comportant des turbines telles que représentées sur la figure 3.

Sur la branche 20 de l'aérogénérateur 100 sont montées, avantageusement de façon amovible, une ou plusieurs tubulures 201, 202 portant une ou plusieurs turbines.

Par exemple, la tubulure 201 porte la turbine 31' de la figure 3.

Le montage amovible de ces tubulures 201, 202 sur une branche 20 facilite le démontage de la turbine 31' lorsqu'une panne intervient.

Par ailleurs, les tubulures 201, 202 permettent de gérer à souhait la disposition respective des turbines sur l'aérogénérateur 100.

Avantageusement, l'ensemble des turbines sera monté sur les branches par l'intermédiaire de telles tubulures 201, 202.

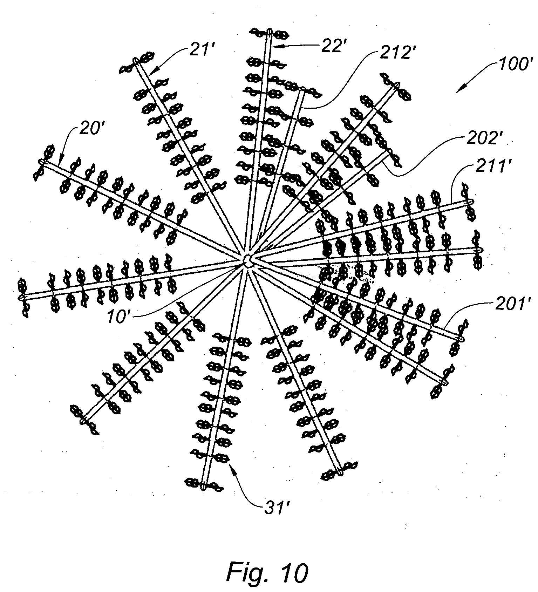

Cela permet donc de construire aisément un aérogénérateur de la forme souhaitée. L'intérêt est esthétique, dans la mesure où l'on peut ainsi assimiler au mieux la forme de l'aérogénérateur à celui d'un arbre. L'intérêt est également technique car l'agencement réalisé avec ces tubulures 200, 201 permet de limiter l'effet d'écran entre les différentes turbines. La figure 10 représente, selon une vue de dessus, un autre aérogénérateur 100' conforme à l'invention. Il comprend un tronc 10' fait d'une seule pièce ou de plusieurs tronçons fixés les uns aux autres, comme décrit précédemment. Chaque branche est par ailleurs munie de turbines 31', qui sont pour l'exemple celles de la figure 4.

Ce type de tronc 10' permet de former des réceptacles pour les branches qui peuvent alors être réparties au mieux pour limiter les effets d'écran entre les différentes turbines.

Sur la figure 10, on observe ainsi une pluralité de premières branches 20', 21', 22' situées à la même hauteur et réparties à différentes positions angulaires autour du tronc 10'.

L'aérogénérateur 100' présente également une pluralité de deuxièmes branches 201', 211' réparties à différentes positions angulaires autour du tronc 10' et situées à une hauteur supérieure à ladite première pluralité de premières branches.

L'aérogénérateur 100' comprend encore une pluralité de troisièmes branches 202', 212' réparties à différentes positions angulaires autour du tronc 10' et situées à une hauteur inférieure à ladite première pluralité de premières branches.

Ainsi, lorsque le tronc 10' est réalisé d'une seule pièce, les réceptacles sont disposés à différentes hauteurs le long du tronc 10' et à différentes positions angulaires autour de ce tronc 10'.

Lorsque le tronc 10' comprend une pluralité de tronçons fixés les uns aux autres, chaque tronçon comporte au moins un réceptacle pour une branche. Les réceptacles sont alors disposés à différentes hauteurs le long du tronc 10' et à différentes positions angulaires autour de ce tronc 10', en raison du positionnement respectif des différents tronçons. Il convient de noter que lorsque des tubulures 201, 202 telles que celles décrites à l'appui de la figure 9 sont employées, on obtient ainsi un positionnement optimal des différentes turbines les unes par rapport aux autres pour limiter l'effet d'écran entre celles-ci.

L'invention décrite précédemment pourra concerner un aérogénérateur 100, 100' comprenant un tronc 10, 10' et une pluralité de branches 20, 21, 22, 23, 20', 21', 22', 23', 201', 211', 202', 212' s'étendant à partir de ce tronc 10, 10', caractérisé en ce qu'il comporte :

- une pluralité de turbines 31, 32, 33, 34, 35, 31', 31", 31"' réparties sur les différentes branches, chaque turbine présentant un axe de rotation 40, 40', 40", 40"' vertical ; et
- un générateur électrique 50, 50' monté à l'intérieur de chaque turbine sur l'axe de rotation de ladite turbine.

A ces caractéristiques principales peuvent être associées les autres caractéristiques décrites précédemment.

Toutefois, l'invention pourrait concerner un aérogénérateur 100, 100' comprenant un tronc 10, 10' et une pluralité de branches 20, 21, 22, 23, 20', 21', 22', 23', 201', 211', 202', 212' s'étendant à partir de ce tronc 10, 10' caractérisé en ce qu'il comporte :

- une pluralité de turbines 31, 32, 33, 34, 35, 31', 31", 31"' réparties sur les différentes branches, chaque turbine présentant un axe de rotation 40, 40', 40", 40"' vertical ;
- un générateur électrique 50, 50' comportant au moins un rotor 71, 73 monté sur l'axe de rotation 40, 40', 40", 40"' de chaque turbine, de forme annulaire et muni d'aimants permanents 710 disposés sur le contour dudit rotor 71, 73 et un stator, monté sur un bâti de la turbine, de forme annulaire et comportant des bobines destinées à interagir aux aimants permanents du rotor 71, 73.

Les avantages de cet aérogénérateur sont notamment liés à la compacité du générateur électrique. Ceci permet son logement dans la turbine sans affecter sensiblement la performance de cette dernière, son encombrement. On limite ainsi les effets d'interaction potentiels entre les différentes turbines de l'aérogénérateur. D'autres avantages de cette configuration sont mentionnés précédemment.

A ces caractéristiques principales peuvent être adjointes les caractéristiques qui suivent, prises seules ou en combinaison.

Avantageusement, il est prévu un générateur électrique avec deux rotors 71, 73 identiques, chacun de ces rotors étant disposé de part et d'autre du stator 72 comportant, sur chacune de ses faces, des bobines faisant face aux aimants permanents 710, 730 du rotor 71, 73 concerné.

Généralement, chaque rotor 71, 73 comportera alternativement un aimant permanent de polarité « Nord » et un aimant permanent de polarité « Sud ».

Les aimants permanents sont avantageusement disposés sur le contour du ou de chaque rotor.

Avantageusement, chaque générateur électrique 50, 50' est monté à l'intérieur de la turbine concernée.

Avantageusement, chaque générateur électrique 50, 50' est montée en partie inférieure de la turbine.

De plus, chaque turbine 31, 32, 33, 34, 35, 31', 31", 31"' peut présenter au moins deux parties incurvées 310, 311, 310', 311' s'étendant le long cet axe, chacune de ces parties comportant une ouverture 312, 313, 313' attenante à cet axe et en ce que le générateur électrique 50, 50' est logé à l'intérieur de la turbine de sorte qu'un espace 314 soit maintenu entre le générateur électrique et les contours des ouvertures.

Au moins certaines turbines 31', 31"', avantageusement l'ensemble de celles-ci, présentent la forme d'une ogive dont l'axe longitudinal se confond avec l'axe de rotation de la turbine.

Au moins certaines turbines, avantageusement l'ensemble de celles-ci sont de type Savonius, c'est-à-dire qu'elles présentent au moins deux parties incurvées semi-cylindriques désaxées l'une par rapport à l'autre pour définir lesdites ouvertures.

Il peut être prévu entre 80 et 150 turbines, chaque turbine comportant des parties incurvées dont la surface cumulée est comprise entre 8cm$^2$ et 64cm$^2$.

La nature des matériaux formant la turbine peut être choisie parmi la liste définie précédemment.

Une armature de rigidification peut également être prévue, comme décrite précédemment.

Au surplus, l'arrangement de l'arbre (existence d'une tubulure 200, 201, montage amovible de cette tubulure sur l'arbre, montage amovible de la branche sur le tronc, ...) tel que décrit à l'appui des figures 9 et 10 est transposable à cette autre définition de l'invention.

Ainsi, l'aérogénérateur 100, 100' peut comprendre au moins une tubulure 200, 201 portant au moins une turbine 31, 32, 33, 34, 35, 31', 31", 31'", ladite au moins une tubulure étant montée sur une branche 20.

Ladite au moins une tubulure 200, 201 peut être montée de façon amovible sur ladite branche 20.

Chaque branche 20, 21, 22, 23 peut comprendre plusieurs turbines 31, 32, 33, 34, 35, 31', 31", 31'".

Les branches 20', 21', 22', 23', 201', 211', 202', 212' peuvent être montées de façon amovible sur le tronc 10'.

Le tronc 10' peut être réalisé d'une seule pièce et comprend une pluralité de réceptacles pour lesdites branches, ces réceptacles étant disposés à différentes hauteurs le long du tronc et à différentes positions angulaires autour de ce tronc.

Le tronc 10' peut comprendre une pluralité de tronçons fixés les uns aux autres, chaque tronçon comportant au moins un réceptacle pour une branche, lesdits réceptacles étant disposés à différentes hauteurs le long du tronc et à différentes positions angulaires autour de ce tronc.

Selon une autre définition de l'invention, celle-ci pourrait concerner un aérogénérateur 100, 100' comprenant un tronc 10, 10' et une pluralité de branches 20, 21, 22, 23, 20', 21', 22', 23', 201', 211', 202', 212' s'étendant à partir de ce tronc 10, caractérisé en ce qu'il comprend :

- une pluralité de turbines 31, 32, 33, 34, 35, 31', 31", 31'" réparties sur les différentes branches et comprise entre 80 et 150, au moins certaines turbines étant de type Savonius, c'est-à-dire qu'elles présentent un axe de rotation 40, 40', 40", 40'" vertical et au moins deux parties incurvées semi-cylindriques désaxées l'une par rapport à l'autre et définissant des ouvertures dans la turbine, lesdites parties incurvées d'une turbine présentant une surface cumulée comprise entre 8cm$^2$ et 64cm$^2$ ; et

- un générateur électrique 50, 50' monté sur l'axe de rotation de chaque turbine.

Les caractéristiques intrinsèques d'une turbine (forme, surface) et le nombre de turbines sont judicieusement choisies pour maximiser la puissance électrique générée par l'aérogénérateur, compte tenu des différentes contraintes esthétiques (forme de feuille) et techniques telles que l'effet d'écran entre différentes turbines voisines.

Avantageusement, l'ensemble des turbines est de type Savonius.

Dans ce cas, chaque turbine peut présenter une forme d'ogive dont l'axe longitudinal se confond avec l'axe de rotation de la turbine.

Par ailleurs, le générateur électrique 50, 50' peut être monté à l'intérieur de la turbine concernée, par exemple en partie inférieure de celle-ci.

Lorsque le générateur électrique 50, 50' est logé à l'intérieur de la turbine, il est prévu qu'un espace 314 entre le générateur électrique et les contours des ouvertures.

De plus, le générateur électrique 50, 50' peut comporter au moins un rotor 71, 73 monté sur l'axe de rotation 40, 40', 40", 40'" de chaque turbine, de forme annulaire et muni d'aimants permanents 710, 730 et un stator, monté sur un bâti de la turbine, de forme annulaire et comportant des bobines 720 destinées à interagir avec les aimants permanents du rotor 71, 73.

Avantageusement, il est prévu un générateur électrique avec deux rotors 71, 73 identiques, chacun de ces rotors étant disposé de part et d'autre du stator 72 comportant, sur chacune de ses faces, des bobines faisant face aux aimants permanents du rotor concerné.

Avantageusement, les aimants permanents 710, 730 sont montés sur le contour du ou de chaque rotor. De même, les bobines 720 sont avantageusement montées sur le contour du stator 72.

La nature des matériaux formant la turbine peut être choisie parmi la liste définie précédemment.

Une armature de rigidification peut également être prévue, comme décrite précédemment.

Au surplus, l'arrangement de l'arbre (existence d'une tubulure 200, 201, montage amovible de cette tubulure sur l'arbre, montage amovible de la branche sur le tronc, ...) tel que décrit à l'appui des figures 9 et 10 est transposable à cette autre définition de l'invention.

Ainsi, l'aérogénérateur 100, 100' peut comprendre au moins une tubulure 200, 201 portant au moins une turbine 31, 32, 33, 34, 35, 31', 31", 31'", ladite au moins une tubulure étant montée sur une branche 20.

Ladite au moins une tubulure 200, 201 peut être montée de façon amovible sur ladite branche 20.

Chaque branche 20, 21, 22, 23 peut comprendre plusieurs turbines 31, 32, 33, 34, 35, 31', 31", 31'".

Les branches 20', 21', 22', 23', 201', 211', 202', 212' peuvent être montées de façon amovible sur le tronc 10'.

Le tronc 10' peut être réalisé d'une seule pièce et comprend une pluralité de réceptacles pour lesdites branches, ces réceptacles étant disposés à différentes hauteurs le long du tronc et à différentes positions angulaires autour de ce tronc.

Le tronc 10' peut comprendre une pluralité de tronçons fixés les uns aux autres, chaque tronçon comportant au moins un réceptacle pour une branche, lesdits réceptacles étant disposés à différentes hauteurs le long du tronc et à différentes positions angulaires autour de ce tronc.

**Revendications**

1. Aérogénérateur en forme d'arbre (100, 100') comprenant un tronc (10, 10') et une pluralité de branches (20, 21, 22, 23, 20', 21', 22', 23', 201', 211', 202', 212') s'étendant à partir de ce tronc (10), **caractérisé en ce qu'**il comporte :

   - des tubulures (201, 202) montées sur au moins une branche (20),
   - une pluralité de turbines (31, 32, 33, 34, 35, 31', 31", 31''') présentant une forme assimilable à celle d'une feuille d'arbre et réparties sur les différentes branches, portées par les tubulures, au moins une branche étant munie de plusieurs turbines, chaque turbine présentant un axe de rotation (40, 40', 40", 40''') vertical ; et
   - un générateur électrique (50, 50') monté à l'intérieur de chaque turbine sur l'axe de rotation de ladite turbine, les branches étant réparties à différentes positions angulaires autour du tronc.

2. Aérogénérateur (100, 100') selon la revendication 1 , **caractérisé en ce que** chaque turbine (31 , 32, 33, 34, 35, 31', 31", 31''') présente au moins deux parties incurvées (310, 311, 310', 311') s'étendant le long cet axe, chacune de ces parties comportant une ouverture (312, 313, 313') attenante à cet axe et **en ce que** le générateur électrique (50, 50') est logé à l'intérieur de la turbine de sorte qu'un espace (314) soit maintenu entre le générateur électrique et les contours des ouvertures.

3. Aérogénérateur (100, 100') selon l'une des revendications précédentes, **caractérisée en ce qu'**au moins certaines turbines (31', 31''') présentent la forme d'une ogive dont l'axe longitudinal se confond avec l'axe de rotation de la turbine.

4. Aérogénérateur (100, 100') selon l'une des revendications 2 ou 3, **caractérisé en ce qu'**au moins certaines turbines sont de type Savonius, c'est-à-dire qu'elles présentent au moins deux parties incurvées semi-cylindriques désaxées l'une par rapport à l'autre pour définir lesdites ouvertures,

Comprenant en outre éventuellement entre 80 et 150 turbines, chaque turbine comportant des parties incurvées dont la surface cumulée est comprise entre 8 cm$^2$ et 64 cm$^2$.

5. Aérogénérateur (100, 100') selon l'une des revendications précédentes, **caractérisée en ce qu'**au moins certaines turbines (31, 31') comprennent une armature de rigidification (60') fixée en deux points de l'axe de rotation (40') de la turbine (31').
l'armature de rigidification (60') se conformant en outre éventuellement aux contours externes (310'a, 311'a) de chaque partie (310', 31 1 ') de la turbine (31').

6. Aérogénérateur (100, 100') selon l'une des revendications précédentes, **caractérisé en ce que** chaque turbine (31, 31') est réalisée en un matériau choisi parmi le polycarbonate, le polyéthylène, un métal de préférence non oxydable, un acier ou du bois tel que le bambou.

7. Aérogénérateur (100, 100') selon l'une des revendications précédentes, **caractérisé en ce que** le générateur électrique (50, 50') comprend :

   au moins un rotor (71 , 73), monté sur l'axe de rotation (40, 40', 40", 40''') de la turbine, de forme annulaire et muni d'aimants permanents (710, 711); et
   un stator (72), monté sur un bâti de la turbine, de forme annulaire et comportant des bobines (720) destinées à interagir avec les aimants permanents du rotor (71, 73),

   le générateur électrique (100, 100') comprenant en outre éventuellement deux rotors (71, 73) identiques, chacun de ces rotors étant disposé de part et d'autre du stator (72) comportant, sur chacune de ses faces, des bobines faisant face aux aimants permanents du rotor concerné.

8. Aérogénérateur (100, 100') selon laevendication 7, **caractérisé en ce que** les aimants permanents (710, 730) sont disposés sur le contour du ou de chaque rotor (71, 73) et **en ce que** les bobines (720) sont également disposés sur le contour du stator (72).

9. Aérogénérateur (100, 100') selon la revendication précédente, **caractérisé en ce que** ladite au moins une tubulure (200, 201) est montée de façon amovible sur ladite branche (20).

10. Aérogénérateur (100, 100') selon l'une des revendications précédentes, **caractérisé en ce que** chaque branche (20, 21, 22, 23) comprend plusieurs turbines (31, 32, 33, 34, 35, 31').

**11.** Aérogénérateur (100, 100') selon l'une des revendications précédentes, **caractérisé en ce que** les branches (20', 21', 22', 23', 201', 211', 202', 212') sont montées de façon amovible sur le tronc (10').

**12.** Aérogénérateur (100, 100') selon l'une des revendications précédentes, **caractérisé en ce que** le tronc (10') est réalisé d'une seule pièce et comprend une pluralité de réceptacles pour lesdites branches, ces réceptacles étant disposés à différentes hauteurs le long du tronc et à différentes positions angulaires autour de ce tronc.

**13.** Aérogénérateur selon l'une des revendications 1 à 12, **caractérisé en ce que** le tronc (10') comprend une pluralité de tronçons fixés les uns aux autres, chaque tronçon comportant au moins un réceptacle pour une branche, lesdits réceptacles étant disposés à différentes hauteurs le long du tronc et à différentes positions angulaires autour de ce tronc.

## Patentansprüche

**1.** Windgenerator in Form eines Baums (100, 100'), umfassend einen Stamm (10, 10') und eine Mehrzahl von Ästen (20, 21, 22, 23, 20', 21', 22', 23', 201', 211', 202', 212'), welche sich ausgehend von dem Stamm (10) erstrecken, **dadurch gekennzeichnet, dass** er umfasst:

- Leitungen (201, 202), welche an wenigstens einem Ast (20) angeordnet sind,
- eine Mehrzahl von Turbinen (31, 32, 33, 34, 35, 31', 31", 31'''), welche eine Form aufweisen, welche mit derjenigen eines Blatts eines Baums vergleichbar ist, und welche an den verschiedenen Ästen von den Leitungen getragen verteilt sind, wobei wenigstens ein Ast mit mehreren Turbinen ausgerüstet ist, wobei jede Turbine eine vertikale Rotationsachse (40, 40', 40", 40''') aufweist; und
- einen elektrischen Generator (50, 50'), welcher im Inneren von jeder Turbine an der Rotationsachse der Turbine angeordnet ist,

wobei die Äste an verschiedenen Winkelpositionen um den Stamm herum verteilt sind.

**2.** Windgenerator (100, 100') nach Anspruch 1, **dadurch gekennzeichnet, dass** jede Turbine (31, 32, 33, 34, 35, 31', 31", 31''') wenigstens zwei gekrümmte Abschnitte (310, 311, 310', 311') aufweist, welche sich entlang dieser Achse erstrecken, wobei jeder dieser Abschnitte eine Öffnung (312, 313, 313') umfasst, welche an diese Achse angrenzt, und wobei der elektrische Generator (50, 50') im Inneren der Turbine derart aufgenommen ist, dass ein Freiraum (314) zwischen dem elektrischen Generator und den Konturen der Öffnungen beibehalten wird.

**3.** Windgenerator (100, 100') nach einem der vorhergehenden Ansprüche, **dadurch gekennzeichnet, dass** wenigstens einige Turbinen (31', 31''') die Form eines Spitzbogens aufweisen, dessen longitudinale Achse mit der Rotationsachse der Turbine zusammenfällt.

**4.** Windgenerator (100, 100') nach einem der Ansprüche 2 oder 3, **dadurch gekennzeichnet, dass** wenigstens einige Turbinen vom Savonius-Typ sind, d.h. dass sie wenigstens zwei halbzylindrisch gekrümmte Abschnitte aufweisen, welche gegeneinander versetzt sind, um die Öffnungen zu definieren, gegebenenfalls ferner umfassend zwischen 80 und 150 Turbinen, wobei jede Turbine gekrümmte Abschnitte umfasst, deren Gesamtfläche zwischen 8 cm$^2$ und 64 cm$^2$ beträgt.

**5.** Windgenerator (100, 100') nach einem der vorhergehenden Ansprüche, **dadurch gekennzeichnet, dass** wenigstens einige Turbinen (31, 31') ein Versteifungsgestell (60') umfassen, welches an zwei Punkten der Rotationsachse (40') der Turbine (31') befestigt ist,
wobei sich das Versteifungsgestell (60') gegebenenfalls ferner an die Außenkonturen (310'a, 311'a) von jedem Abschnitt (310', 311') der Turbine (31') anpasst.

**6.** Windgenerator (100, 100') nach einem der vorhergehenden Ansprüche, **dadurch gekennzeichnet, dass** jede Turbine (31, 31') aus einem Material hergestellt ist, welches ausgewählt ist aus Polycarbonat, Polyethylen, einem vorzugsweise rostfreien Metall, einem Stahl oder Holz, wie beispielsweise Bambus.

**7.** Windgenerator (100, 100') nach einem der vorhergehenden Ansprüche, **dadurch gekennzeichnet, dass** der elektrische Generator (50, 50') umfasst:

wenigstens einen Rotor (71, 73), welcher an der Rotationsachse (40, 40', 40", 40''') der Turbine angebracht ist, von ringförmiger Form und ausgerüstet mit Permanentmagneten (710, 711) ist; und
einen Stator (72), welcher in einem Turbinenrahmen angebracht ist, von ringförmiger Form ist und Spulen (720) umfasst, welche dazu vorgesehen sind, mit den Permanentmagneten des Rotors (71, 73) zusammenzuwirken,
wobei der elektrische Generator (100, 100') ferner gegebenenfalls zwei identische Rotoren (71, 73) umfasst, wobei jeder der Rotoren beiderseits des Stators (72) angeordnet ist und an jeder seiner Flächen Spulen umfasst, welche den Permanentmagneten des entsprechenden Rotors gegenüberliegen.

8. Windgenerator (100, 100') nach Anspruch 7, **dadurch gekennzeichnet, dass** die Permanentmagnete (710, 730) an der Kontur des Rotors oder jedes der Rotoren (71, 73) angeordnet sind und dass die Spulen (720) ebenfalls an der Kontur des Stators (72) angeordnet sind.

9. Windgenerator (100, 100') nach dem vorhergehenden Anspruch, **dadurch gekennzeichnet, dass** die wenigstens eine Leitung (200, 201) in lösbarer Weise an dem Ast (20) angebracht ist.

10. Windgenerator (100, 100') nach einem der vorhergehenden Ansprüche, **dadurch gekennzeichnet, dass** jeder Ast (20, 21, 22, 23) mehrere Turbinen (31, 32, 33, 34, 35, 31') umfasst.

11. Windgenerator (100, 100') nach einem der vorhergehenden Ansprüche, **dadurch gekennzeichnet, dass** die Äste (20', 21', 22', 23', 201', 211', 202', 212') in lösbarer Weise an dem Stamm (10') angebracht sind.

12. Windgenerator (100, 100') nach einem der vorhergehenden Ansprüche, **dadurch gekennzeichnet, dass** der Stamm (10') durch ein einzelnes Teil gebildet ist und eine Mehrzahl von Aufnahmen für die Äste umfasst, wobei die Aufnahmen in verschiedenen Höhen entlang des Stamms und in verschiedenen Winkelpositionen um den Stamm herum angeordnet sind.

13. Windgenerator nach einem der Ansprüche 1 bis 12, **dadurch gekennzeichnet, dass** der Stamm (10') eine Mehrzahl von aneinander befestigten Stücken umfasst, wobei jedes Stück wenigstens eine Aufnahme für einen Ast umfasst, wobei die Aufnahmen in verschiedenen Höhen entlang des Stamms und in verschiedenen Winkelpositionen um den Stamm herum angeordnet sind.

**Claims**

1. Tree-shaped aerogenerator (100, 100') comprising a trunk (10, 10') and a plurality of branches (20, 21, 22, 23, 20', 21', 22', 23', 201', 211', 202', 212') extending from said trunk (10), **characterized in that** it comprises:

   - tubes (200, 201) mounted on at least one branch (20).
   - a plurality of turbines (31, 32, 33, 34, 35, 31', 31", 31''') with a shape similar to that of a tree leaf and distributed over the different branches, supported by the tubes, at least one branch being provided with a plurality of turbines, each turbine having a vertical axis of rotation (40, 40', 40", 40'''), and
   - an electric generator (50, 50') mounted inside each turbine on the axis of rotation of said turbine,

   the branches being arranged at different angular positions around the trunk.

2. Aerogenerator (100, 100') according to claim 1, wherein each turbine (31, 32, 33, 34, 35, 31', 31", 31''') has at least two curved parts (310, 311, 310', 311') extending along said axis, each of these parts comprising an opening (312, 313, 313') adjacent to said axis, and wherein the electric generator (50, 50') is housed inside the turbine so that a gap (314) is maintained between the electric generator and the edges of the openings.

3. Aerogenerator (100, 100') according to one of the preceding claims, wherein at least some of the turbines (31', 31''') have a torpedo shape for which the longitudinal axis coincides with the axis of rotation of the turbine.

4. Aerogenerator (100, 100') according to one of claims 2 or 3, wherein at least some of the turbines are Savonius type turbines, meaning that they have at least two semi-cylindrical curved parts offset relative to each other so as to define said openings, Further optionally comprising between 80 and 150 turbines, each turbine having curved parts whose total surface area is between 8cm$^2$ and 64cm$^2$.

5. Aerogenerator (100, 100') according to one of the preceding claims, wherein at least some of the turbines (31, 31') comprise a stiffening frame (60') secured at two points of the axis of rotation (40') of the turbine (31'), wherein optionally the stiffening frame (60') follows the outside contours (310'a, 311'a) of each part (310', 311') of the turbine (31').

6. Aerogenerator (100, 100') according to one of the preceding claims, wherein each turbine (31, 31') is made of a material selected from among: polycarbonate, polyethylene, a metal that is preferably non-oxidizable, a steel, or a wood such as bamboo.

7. Aerogenerator (100, 100') according to one of the preceding claims, wherein the electric generator (50, 50') comprises:

   at least one rotor (71, 73) mounted on the axis of rotation (40, 40', 40", 40''') of the turbine, annular in shape and provided with permanent magnets (710, 711); and

a stator (72) mounted on a frame of the turbine, annular in shape and comprising coils (720) intended to interact with the permanent magnets of the rotor (71, 73),

wherein the electric generator (100, 100') optionally further comprises two identical rotors (71, 73), said rotors being arranged one on each side of the stator (72) which has, on each of its faces, coils facing the permanent magnets of the rotor concerned.

8. Aerogenerator (100, 100') according to claim 7, wherein the permanent magnets (710, 730) are arranged at the edge of the or of each rotor (71, 73) and wherein the coils (720) are also arranged at the edge of the stator (72).

9. Aerogenerator (100, 100') according to the preceding claim, wherein said at least one tube (200, 201) is detachably mounted on said branch (20).

10. Aerogenerator (100, 100') according to one of the preceding claims, wherein each branch (20, 21, 22, 23) comprises a plurality of turbines (31, 32, 33, 34, 35, 31').

11. Aerogenerator (100, 100') according to one of the preceding claims, wherein the branches (20', 21', 22', 23', 201', 211', 202', 212') are detachably mounted on the trunk (10').

12. Aerogenerator (100, 100') according to one of the preceding claims, wherein the trunk (10') is made as one piece and comprises a plurality of receptacles for said branches, these receptacles being arranged at different heights along the trunk and at different angular positions around said trunk.

13. Aerogenerator according to one of claims 1 to 12, wherein the trunk (10') comprises a plurality of sections attached to each other, each section comprising at least one receptacle for a branch, said receptacles being arranged at different heights along the trunk and at different angular positions around said trunk.

Fig. 1

Fig. 2

311'

313'

311'a

60'

310'

50'

310'a

40'

**Fig. 3**

202

31'

201

20

**Fig. 9**

31"

310"

300"

40"

311"

310"a

311"a

D

e

h

## Fig. 4

310'''

ℓ₁

311'''a

A

A

h

B

B

ℓ₂

310'''a

311'''

ℓ₃

40'''

311'''

Coupe A-A

310'''

40'''

311'''

300'''

Coupe B-B

310'''

## Fig. 5

Fig. 6

Fig. 7

40,40',40",40'''

71

711

712

710

50,50'

720

72

73

730

Fig. 8

*Fig. 10*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011132130 A

- US 20100289269 A